# EUROPEAN PATENT SPECIFICATION

(11) **EP 1 238 465 B1**
(45) Date of publication and mention of the grant of the patent: **07.09.2005**
(21) Application number: 01926480.3
(22) Date of filing: 30.03.2001
(51) Int. Cl.: H04Q 7/38

(54) **METHOD AND APPARATUS FOR SOFT HANDOFF COMMUNICATIONS IN A COMMUNICATION SYSTEM OPERATING ACCORDING TO MULTIPLE COMMUNICATION STANDARDS**
VERFAHREN UND VORRICHTUNG ZUM SOFT HANDOVER IN EINEM KOMMUNIKATIONSSYSTEM, WELCHES GEMÄSS MEHREREN KOMMUNIKATIONSSTANDARDS OPERIERT
PROCEDE ET APPAREIL DE TRANSFERT DOUX DE COMMUNICATIONS DANS UN SYSTEME DE COMMUNICATION FONCTIONNANT SELON PLUSIEURS NORMES

(30) Priority: 07.04.2000 US 545125
(43) Date of publication of application: 11.09.2002
(60) Divisional application: 05014319.7
(73) Proprietor: MOTOROLA, INC., Schaumburg, IL 60196 (US)
(72) Inventor: JALLOUL, Louay, Palatine, IL 60067 (US); TENBROOK, Keith, A., Cary, IL 60013 (US); CHEN, Jiangnan, Darien, IL 60561 (US); ROTSTEIN, Ron, Arlington Heights, IL 60004 (US); LUZ, Yuda, Yehuda, Buffalo Grove, IL 60089 (US)
(74) Representative: Openshaw, Paul Malcolm
(86) International application number: PCT/US2001/010210
(87) International publication number: WO 2001/078240

(56) References cited:
- DE-A- 19 819 423
- DE-C- 19 637 437
- US-A- 5 594 718
- US-A- 5 737 703
- US-A- 5 999 815
- US-A- 6 021 328
- US-A- 6 122 270
- US-A- 6 134 439

## Description

### Background of the Invention

The invention relates to the field of communications and communication systems, and more particularly, to a code division multiple access (CDMA) communication system.

Several types of commercially available CDMA communication systems operate according to one or more of multiple communication standards, such as IS-95B and IS-95C standards. Such systems evolve from one generation to another. For example, the IS-95B standard followed a previously known IS-95A standard to provide additional capacity while improving performance in many different aspects of the CDMA communication systems. Recently the IS-95C standard, otherwise known as IS3000, has been introduced to meet even a higher demand for capacity and performance. The standards describing the details of IS-95A, IS-95B, IS-95C (IS3000) systems, a copy of each may be obtained by contacting ***Telecommunications Industry Association in Washington DC, USA,*** or visiting the world wide web site at ***www.tiaonline.org,*** incorporated by reference herein.

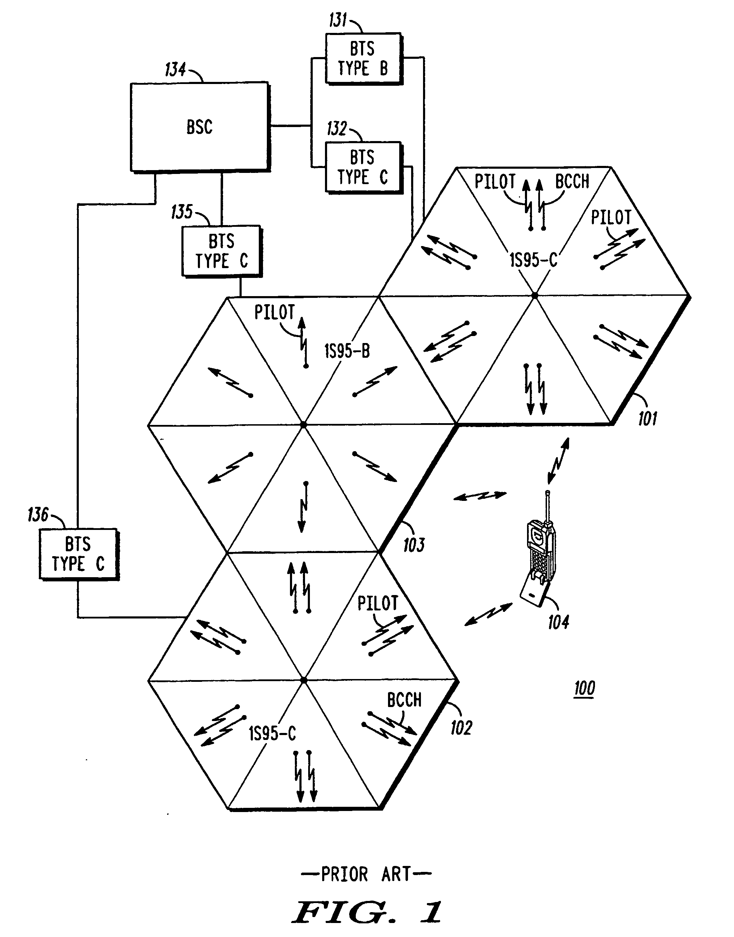

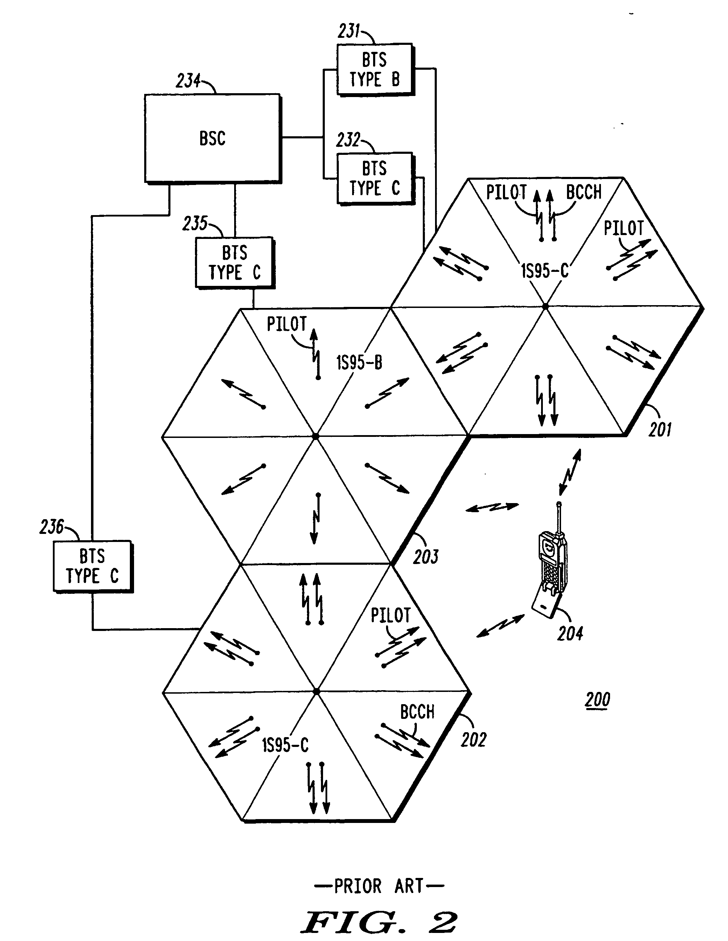

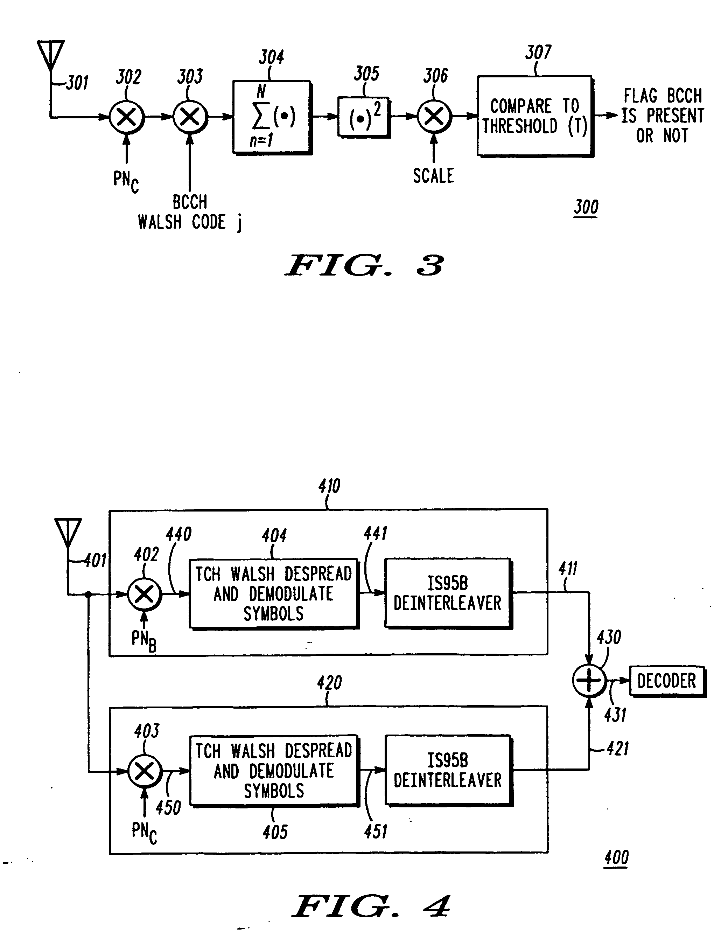

Referring to FIG. 1, a simplified block diagram of a communication system 100 with several cell sites coverage areas and certain associated building blocks is shown. Often times CDMA systems operating according to different standards are implemented in coverage areas located side by side, in proximity of each other or in an overlapping coverage area. For example, a cell site 101 having multiple sectors provides communication services according to IS-95B and IS95-C standards in an overlapping coverage area. Cell site 101 achieves multi-type services by coupling a base transceiver station (BTS) 131 of type IS-95B and BTS 132 of type IS-95C to a base station controller (BSC) 134. Since BSC 134 controls some aspects of the communication calls made via cell site 101, BSC 134 may decide which type of service, type B for IS-95B or type C for IS-95C, a mobile user may receive while it is in the coverage area. The mobile user may also select the service type. BSC 134 provides the communication services through the selected communication type by routing the information through the corresponding BTS, for example, either BTS 131 or BTS 132 if the mobile station is in the cell site 101 coverage area.

According to one example of a cell configuration as shown in communication system 100, a cell site 103 adjacent to cell site 101 may provide only communication services according to IS-95B standards. As such, a BTS 135 serving cell site 103 is of the B type and coupled to BSC 134. A cell site 102 adjacent to cell sites 103 and 101 may provide communication services according to IS-95C standards. As such a BTS 136 serving cell site 102 is of the C type and coupled to BSC 134. Other cell site configurations are also possible.

Since mobile stations are also evolving with the standards, a mobile station may operate in a single-mode or dual-mode or other multi-mode. In case of dual-mode operation, the mobile station may operate according to both IS-95B and IS-95C standards. A mobile station (MS) 104, if it is in a single-mode operation, may receive communication services from cell sites 101 and 102 through BTSs 132 and 136 or cell sites 101 and 103 through BTSs 131 and 135 depending on whether its mode of operation is IS-95C or IS-95B respectively. A dual-mode MS 104, however, may not be able to efficiently receive communication services from all three cell sites 101-103. At least to some extent, MS 104 in dual mode operation may not benefit from soft hand operation from all three cell sites.

The operation known as soft handoff commonly known to one ordinary skilled in the art allows a mobile station to receive and combine from neighboring base stations different signals to improve receiving quality. The received signals are combined in the receiver to gain improvement in reception and decoding of the transmitted information. The operations relating to the soft handoff are well known to one ordinary skilled in the art in view of the description provided in the IS-95B and IS-95C standards.

When a mobile station receives signals communicated according to a common standard, the soft-combining operation is easily performed. For example, if mobile station 104 is communicating with cell site 101 according to IS-95B standard through BTS 131 and moves to cell site 103, the soft handoff operation is easily performed because cell site 103 operates through BTS 135 which is of the B type. As such, BSC 134 may easily transmit the information to MS 104 via cell sites 101 and 103 through BTSs 131 and 135 which both are of the B type. However, if mobile station 104 is communicating with cell site 101 according to IS-95B standard and moves to cell site 102, the soft handoff operation may not be possible because cell site 102 provides only communication services through BTS 136 operating according to IS-95C standard. Moreover, when MS 104 is communicating with cell site 101 through BTS 131 operating according to IS-95B standard, soft handoff operation for signals transmitted from cell site 101 through BTS 132 operating according to IS-95C standard may not be possible or difficult. It is well understood by one ordinary skilled in the art that the terms cell site and sector are interchangeable in the way the communication services are provided.

DE-A-198 19 423 discloses a mobile station (MS) in wireless communication with a first cell in a first multiple access (MA) communication system, and via the first cell with a first base station controller (BSC) of the first MA communication system. When the MS receives an instruction to initiate a switch, or handoff, to a second MA communication system, the MS then measures signal strength of a signal from the second MA communication system. In one embodiment, the MS then reports the signal strength measurement to the first BSC of the first MA communication system and the first BSC determines, based on the signal strength measurement, whether to handoff off the MS to the second MA communication system. In another embodiment, the MS self-determines, based on the signal strength measurement, whether to perform a handoff to the second MA communication system and then requests the first BSC to schedule the handoff. The MS then receives a command to switch from the first MA communication system to the second MA communication system at a preset time and, at the preset time, switches over.

US-A-6021 328 discloses an arrangement in which, as an MS moves away from a serving cell, the communications link with the serving cell may become too weak to support communications between the MS and the cell and if the MS is not handed off, the quality of the communications may degrade and the call may be dropped. There is no disclosure concerning an MS transmitting a pilot strength measurement message (PSMM) and, when failing to receive a handoff direction message after transmitting the PSMM, initiating a handoff to a second communication standard.

Therefore, there is a need for a method and apparatus that facilitates soft-combining operation of received signals transmitted according to different CDMA standards.

### Summary of the Invention

In a first aspect, the present invention provides a method for soft handoff operation of at least a first signal transmitted according to a first communication standard and a second signal transmitted according to a second communication standard, as claimed in claim 1.

In a further aspect, the present invention provides a mobile station, as claimed in claim 7.

### Brief Description of the Drawings

FIG. 1 is a block diagram of an exemplary communication system of the prior art.
FIG. 2 is a block diagram of an exemplary communication system in accordance with an embodiment of the present invention.
FIG. 3 is a block diagram of a communication receiver for detecting presence of BCCH channel in accordance with an embodiment of the present invention.
FIG. 4 is a block diagram of a receiver for receiving, combining and decoding the first and second signals communicated according to respectively the first and second communication standards in accordance with an embodiment of the present invention.
FIG. 5 is an example of a messaging system between a mobile station and cell sites of type IS-95B and C, respectively, in accordance with an embodiments of the present invention.
FIG. 6 is an example of a messaging system between a mobile station and cell sites of type IS-95B and C, respectively, in accordance with another embodiment of the present invention.

### Detailed Description of the Preferred Embodiment(s)

A communication system operating according to IS-95C standard includes a broadcast common control channel (BCCH). A mobile station operating in dual mode can detect presence of a BCCH. A mobile station capable of operating in dual-mode may substantially benefit from various aspects of the invention that allows soft combining of signals transmitted according to at least two different types of communication standards such IS-95B and IS-95C from different cell sites or sectors.

Referring to FIG. 2, an exemplary communication system 200 is illustrated in accordance with an embodiment of the present invention. Communication system 200 includes multiple cell sites 201-203 (three shown). Each cell site 201-203 is served by one or more base transceiver stations (BTSs) 231, 232, 235, and 236, (i.e., cell site 201 is served by BTSs 231 and 232, cell site 202 is served by BTS 236, and cell site 203 is served by BTS 235) and provides communications services according to one or more communication standards, such as communication standard IS-95B and communication standard IS95-C. Also, each cell site may be sectorized, that is, may be divided into multiple sectors.

As depicted in FIG. 2, cell site 201 provides communication services according to both the first and second communication standards, that is, the IS-95B and IS95-C standards, in an overlapping coverage area. Cell site 201 achieves multi-type services by coupling BTS 231, of type IS-95B, and BTS 232, of type IS-95C, to a base station controller (BSC) 234. BSC 234 controls some aspects of the communication calls made via cell site 201 and can decide which type of service, type B for IS-95B or type C for IS-95C, a mobile user may receive while the user is in a coverage area of cell site 201. The mobile user may also select the service type. BSC 234 provides the communication services through the selected communication type by routing the information through the corresponding BTS, for example, either BTS 231 or BTS 232 if the mobile station is in the cell site 201 coverage area.

Cell site 203, which is adjacent to cell site 201, provides communication services according to IS-95B standards. As a result, BTS 235, serving cell site 103, is of the B type and is coupled to BSC 134. Cell site 202, adjacent to cell sites 201 and 203, provides communication services according to IS-95C standards. As a result, BTS 236, serving cell site 102, is of the C type and is coupled to BSC 134. Other cell site configurations are also possible.

Communication system 200 further includes a mobile station (MS) 204 that may operate in a single-mode or dual-mode or other multi-mode. In case of dual-mode operation, MS 204 may operate according to both IS-95B and IS-95C standards. When MS 204 receives signals communicated according to a common standard, a soft-combining operation is easily performed. For example, if mobile station 204 is communicating with cell site 201 according to IS-95B standard through BTS 231 and moves to cell site 203, the soft handoff operation is easily performed because cell site 203 operates through BTS 235 which is of the B type. As such, BSC 234 may easily transmit the information to MS 204 via cell sites 201 and 203 through BTSs 231 and 235 which both are of the B type. However, in the prior art, when a mobile station is communicating with a first cell site according to a first communication standard, such as the IS-95B standard, and moves to a second cell site that operates according to a second communication standard, such as the IS-95C standard, then a soft handoff operation may be difficult if not impossible.

In communication system 200, a method and apparatus provide for soft handoff operation of at least a first signal transmitted according to a first communication standard, such as the IS-95B standard, and a second signal transmitted according to a second communication standard, such as the IS-95C standard. MS 204 and a cell site providing communications services to MS 204, on an initial contact, may select the first communication standard. MS 204 initially receives the first signal while in a communication link with one of cell sites 201-203 in communication system 200. Such a communication link may be, for example, with cell site 203 that provides communication services according to IS-95B standard.

Each cell site 201-203, or sector of a cell site, transmits a pilot signal encoded with a pseudo random code having a unique time offset, commonly known as PN offset. MS 204 may detect presence of a pilot signal, possibly a new pilot signal other than the one that has already been detected. As a normal part of routine operations performed by MS 204 for maintaining an adequate communication link, MS 204 measures pilot signal strength of the pilot signals received by MS 204 from each of cell sites 201-203. Based on the pilot signal strength and, possibly, other information, MS 204 may find a more appropriate cell site or sector for hand-off of the communication link. MS 204 transmits a pilot strength measurement message based on the measured pilot signal strength by using a communication channel communicated according to the first communication standard.

If the pilot signal was transmitted from a cell site of only type C, such as cell site 202, cell site 1203, which is of the B type, will not respond to the message. Such a response normally is generated from BSC 234. Since BSC 234 has no knowledge of MS 204 capability with respect to the dual-mode operation, BSC 234 would not respond to the message. As a result, MS 204, after a short period of time, fails to receive a handoff direction message after transmitting the pilot strength measurement message. Failing to receive a handoff direction message may be an indication that the pilot signal was transmitted from a cell site of type C. MS 204 searches for detecting presence of a broadcast control channel that is associated with type C cell sites.

When a broadcast control channel is detected, MS 204 measures a carrier-to-interference ratio of the broadcast control channel. In addition, MS 204 compares the carrier-to-nterference ratio to a threshold. When the carrier-to-interference ratio is above the threshold, MS 204 initiates a second communication according to the second communication standard using a reverse link common control channel communicated according to the second communication standard. MS 204 transmits the pilot strength measurement message using the reverse link common control channel. At this point, MS 204 has communication links according to both IS-95B and IS-95C in the communication system 100. BSC 234 then allows initiating a soft handoff operation by transmitting information according to the first and second communication standards respectively via the first and second signals. MS 204 combines the first and second signals to take advantage of the soft handoff operation.

In case MS 204 is detecting a pilot signal from cell site 201, the pilot strength measurement message would be responded to by BSC 234 because cell site 201 is capable of providing communication services for both B and C types, the first and second communication standards. Therefore, BSC 234 generates a handoff direction message based on the message for directing a hand-off operation. It is preferable to move communication services to the C type because it provides better performance than the B type in some instances. Additionally, in this situation, MS 204 may detect presence of a broadcast channel transmitted from cell site 201. MS 204 measures a carrier-to-interference ratio of the broadcast control channel, and compares the carrier-to-interference ratio to a threshold. When the carrier-to-interference ratio is above the threshold, MS 204 initiates a second communication according to the second communication standard, type C, using a reverse link common control channel. MS 204 transmits the pilot strength measurement message using the reverse link common control channel. BSC 234, then, initiates a soft handoff operation by transmitting information according to the first and second communication standards respectively via said first and second signals. MS 204 then combines the first and second signals. At this point, MS 204 may drop the first signal communicated according to the first communication standard, B type, and continue the communication through the second communication standards. As such, MS 204 moves from a B type communication service, to a C type communication service where it is available.

Referring to FIG. 3, a block diagram of a communication receiver 300 is shown in accordance with an embodiment of the present invention. Receiver 300 can be used for detecting presence of BCCH channel. Receiver 300 includes a receiving antenna 301 for receiving, among other signals, the second signal and the BCCH signal. The BCCH signal is fed to a despreader 302 for de-spreading the signal according to a PN sequence assigned to a C type communication. A resulting signal is fed to a despreader 303 for de-spreading function according to a Walsh Code assigned to the BCCH. A resulting signal energy is determined collectively through a summing block 304 and a squaring block 305. If there is any need for scaling the resulting metric energy, a scaling block 306 scales the matrices before being fed to a comparator 307. Comparator 307 compares the energy to a threshold to determine whether a BCCH channel is present. A BCCH channel flag may be produced indicating presence of a BCCH channel.

The threshold may be determined according to a known method. Preferably, the threshold may be determined based on a part or the total amount of transmit power allocate to the pilot signal transmitted from that cell site, a part or total amount of transmit power allocated to the BCCH and a threshold used in the soft hand-off operation in the cell site. The hand-off threshold is well known by one ordinary skilled in the art in view of the IS-95B and IS-95C standards.

Referring to FIG. 4, a block diagram 400 of a receiver is shown for receiving, combining and decoding the first and second signals communicated according to respectively the first and second communication standards. An antenna 401 receives both the first and second signals. Receiver 400 includes a first signal processing block 410 for processing the first received signal according to the first communication standard to produce a first received processed signal 411. Receiver 400 further includes a second signal processing block 420 for processing the second received signal according to the second communication standard to produce a second received processed signal 421. Signals 411 and 421 are combined in a combiner 430 to produce a combined signal 431. The first communication standard may be IS-95B standard, and the second may be IS-95C standard.

Receiver 400 further includes a decoder for decoding combined signal 431 to retrieve information communicated via the first and second signals.

First processing block 410 may include a despreader 402 despreading the first signal by multiplying the first signal with a first PN sequence compatible to the first communication standard (IS-95B) to produce a first despread signal 440. A traffic channel Walsh code despreader/ demodulator 404 despreads and demodulates signal 440 to produce a first demodulated signal 441. A deinterleaver deinterleaves first demodulated signal 441 according to a first interleaving/deinterleaving function of the first communication standard to produce first received processed signal 411.

Second processing block 420 may include a despreader 403 despreading the second signal by multiplying the second signal with a second PN sequence compatible to the second communication standard to produce a second despread signal 450. A traffic channel Walsh code despreader/demodulator 405 despreads and demodulates signal 450 to produce a second demodulated signal 451. A deinterleaver deinterleaves second demodulated signal 451 according to a second interleaving/deinterleaving function of the second communication standard to produce second received processed signal 421.

Communication data rates allowed and provided by a cell site operating according to the first communication standard may be different than the allowed data rates in the second communication standard. As such, in order to make the soft combining operation in a preferred method, the invention may include equalizing communication data rates of the first and second signals communicated according to the first and second communication standards respectively. This step may be accomplished by a messaging system communicated between MS 204 and BSC 234 through corresponding BTS units. Equalizing communication data rate may include communicating data rate of the first signal to a source of the second signal for setting data rate of the second signal equal to data rate of the first signal. Equalizing communication data rate may include adjusting data rate of the second signal to data rate of the first signal.

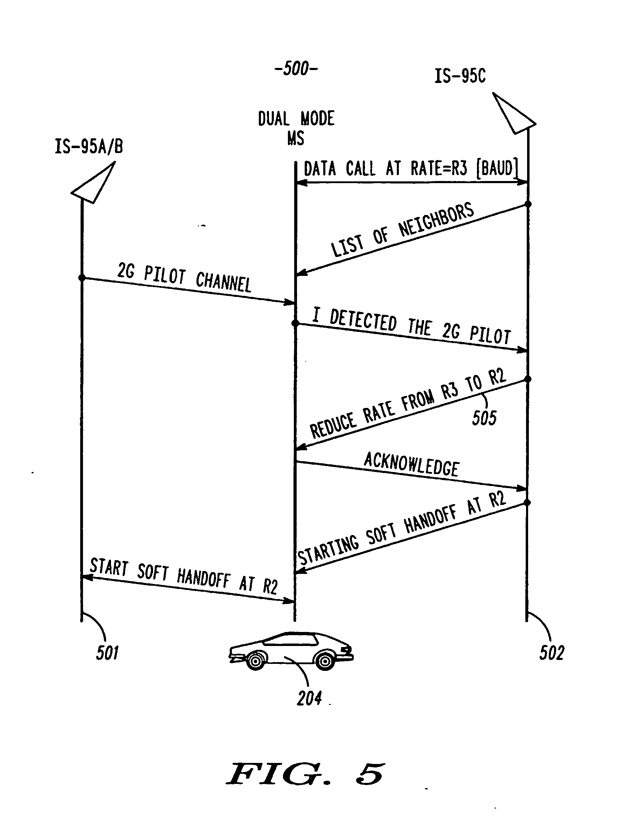

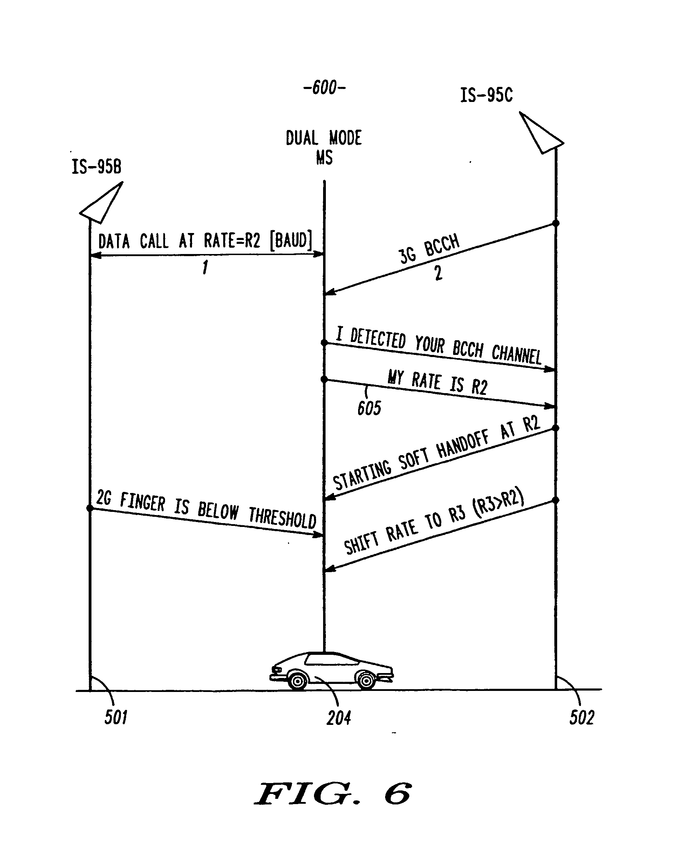

Examples of such messaging systems 500 and 600 are shown in FIGs. 5 and 6 between MS 204 and cell sites 501 and 502 of type IS-95B and C, respectively. Since the available data rates in IS-95C may be higher than the available data rates in IS-95B, messaging system 500 includes at least a step 505 for reducing the data rate. Messaging system 600 may include a step 605 that simply informs the other system of its data rate.

In sum, a method and apparatus provide for soft handoff operation of at least a first signal transmitted according to a first communication standard and a second signal transmitted according to a second communication standard. A mobile station (MS) receives the first signal, detects a pilot signal, measures pilot signal strength, and transmits a pilot strength measurement message. When the MS fails to receive a handoff direction message after transmitting the pilot strength message, the MS searches for a detecting presence of a broadcast control channel (BCCH) associated with cell sites operating on the second communication standard and measures a carrier-to-interference ratio of the BCCH. The MS compares the carrier-to-interference ratio to a threshold, and when the ratio is above the threshold, initiates a second communication according to second communication standard, thus initiating a soft handoff operation and allowing cell sites to transmit information according to the first and second standards via the first and second signals, respectively. The MS combines the first and second signals to take advantage of the soft handoff operation.

While the present invention has been particularly shown and described with reference to particular embodiments thereof, it will be understood that the scope of the invention is not limited to these embodiments, and is instead as defined in the appended claims.

## Claims

1. A method for soft handoff operation in a communication system of at least a first signal transmitted according to a first communication standard and a second signal transmitted according to a second communication standard, the method comprising the steps of:
receiving said first signal initially;
detecting presence of a pilot signal;
measuring pilot signal strength of said pilot signal; and
transmitting a pilot strength measurement message, based on said measuring pilot signal strength, using a communication channel communicated according to said first communication standard; **characterised by**:
failing to receive a handoff direction message after said transmitting said pilot strength measurement message;
in response to failing to receive the handoff direction message, detecting presence of a broadcast control channel;
measuring a carrier to interference ratio of said broadcast control channel;
comparing said carrier to interference ratio to a threshold;
initiating, if said carrier to interference ratio is above said threshold, a second communication according to said second communication standard using a reverse link common control channel communicated according to said second communication standard;
transmitting said pilot strength measurement message using said reverse link common control channel; and
receiving information according to said first and second communication standards respectively via said first and second signals and engaging in a soft handoff operation.

2. The method as recited in claim 1 further comprising a step of equalizing communication data rate of said first and second signals communicated according to said first and second communication standards.

3. The method as recited in claim 1 further comprising a step of combining said first and second signals.

4. The method as recited in claim 1 further comprising steps of:
receiving said pilot strength measurement message via said first common control channel; and
detecting said pilot strength measurement message is of said pilot signal transmitted according to said second communication standard.

5. The method as recited in claim 1 further comprising a step of determining said threshold based on an allocated power level assigned to said pilot signal, an allocated power level assigned to said broadcast control channel, and a soft-handoff threshold in said communication system.

6. The method as recited in claim 1 further comprising a step of dropping one of said first signal and said second signal and continuing communications via the communication standard corresponding to the non-dropped signal.

7. A mobile station comprising:
means for receiving a first signal initially, wherein said first signal corresponds to a first communication standard;
means for detecting presence of a pilot signal;
means for measuring pilot signal strength of said pilot signal;
means for transmitting a pilot strength measurement message, based on said measuring pilot signal strength, using a communication channel communicated according to said first communication standard;
means for, in response to failing to receive a handoff direction message after said transmitting said pilot strength measurement message, detecting presence of a broadcast control channel;
means for measuring a carrier to interference ratio of said broadcast control channel;
means for comparing said carrier to interference ratio to a threshold;
means for initiating, when said carrier to interference ratio is above said threshold, a second communication according to a second communication standard using a reverse link common control channel communicated according to said second communication standard;
means for transmitting said pilot strength measurement message using said reverse link common control channel; and
means for receiving information according to said first and second communication standards respectively via said first and second signals and engaging in a soft handoff operation.

8. The mobile station of claim 7, wherein said means for receiving information and engaging in a soft handoff comprises means for combining said first and second signals to produce a combined signal.

9. The mobile station of claim 8 further comprising:
means for dropping one of said first signal and said second signal and continuing communications via the communication standard corresponding to the non-dropped signal.

## Patentansprüche

1. Verfahren zur Soft-Handoff-Operation in einem Kommunikationssystem, wenigstens eines ersten Signals, welches gemäß einem ersten Kommunikationsstandard gesendet wird, und eines zweiten Signals, welches gemäß einem zweiten Kommunikationsstandard gesendet wird, wobei das Verfahren die Schritte umfasst:
anfängliches Empfangen des ersten Signals;
Erkennen des Vorhandenseins eines Pilotsignals;
Messen einer Pilotsignalstärke des Pilotsignals; und
Senden einer Pilotstärkenmessungsmitteilung, basierend auf der Messung der Pilotsignalstärke, unter Verwendung eines Kommunikationskanals, welcher gemäß dem ersten Kommunikationsstandard kommuniziert wird; **gekennzeichnet durch**:
Fehlschlagen des Empfangens einer Handoff-Anweisungsmitteilung nach Senden der Pilotstärkenmessungsmitteilung;
Erkennen, als Antwort auf das Fehlschlagen des Empfangens der Handoff-Anweisungsmitteilung, des Vorhandenseins eines Rundsendesteuerkanals;
Messen eines Träger-zu-Störungs-Verhältnisses des Rundsendesteuerkanals;
Vergleichen des Träger-zu-Störungs-Verhältnisses mit einem Schwellenwert;
Initiieren, falls das Träger-zu-Störungs-Verhältnis oberhalb des Schwellenwertes liegt, einer zweiten Kommunikation gemäß dem zweiten Kommunikationsstandard, unter Verwendung eines gemeinsamen Rückwärtsverbindungs-Steuerkanals, der gemäß dem zweiten Kommunikationsstandard kommuniziert wird;
Senden der Pilotstärkenmessungsmitteilung unter Verwendung des gemeinsamen Rückwärtsverbindungs-Steuerkanals; und
Empfangen von Information gemäß dem ersten bzw.
zweiten Kommunikationsstandard über das erste und zweite Signal und Einsetzen in einer Soft-Handoff-Operation.

2. Verfahren wie in Anspruch 1 zitiert, weiter umfassend einen Schritt des Angleichens einer Kommunikationsdatenrate des ersten und zweiten Signals, die gemäß dem ersten und zweiten Kommunikationsstandard kommuniziert werden.

3. Verfahren wie in Anspruch 1 zitiert, weiter umfassend einen Schritt des Kombinierens des ersten und zweiten Signals.

4. Verfahren wie in Anspruch 1 zitiert, weiter umfassend die Schritte:
Empfangen der Pilotstärkenmessungsmitteilung über den ersten gemeinsamen Steuerkanal; und
Erkennen, dass die Pilotstärkenmessungsmitteilung diejenige des Pilotsignals ist, welches gemäß dem zweiten Kommunikationsstandard gesendet wird.

5. Verfahren wie in Anspruch 1 zitiert, weiter umfassend einen Schritt des Bestimmens des Schwellenwertes, basierend auf einem zugeordneten Leistungspegel, der dem Pilotsignal zugeordnet ist, eines zugeordneten Leistungspegels, der dem Rundsendesteuerkanal zugeordnet ist, und einem Soft-Handoff-Schwellenwert in dem Kommunikationssystem.

6. Verfahren wie in Anspruch 1 zitiert, umfassend einen Schritt des Fallenlassens, entweder des ersten Signals oder des zweiten Signals und des Fortsetzens der Kommunikation über den Kommunikationsstandard, entsprechend dem nicht fallen gelassenen Signal.

7. Mobilstation, umfassend:
Mittel zum anfänglichen Empfangen eines ersten Signals, wobei das erste Signal einem ersten Kommunikationsstandard entspricht;
Mittel zum Erkennen des Vorhandenseins eines Pilotsignals;
Mittel zum Messen einer Pilotsignalstärke des Pilotsignals;
Mittel zum Senden einer Pilotstärkenmessungsmitteilung, basierend auf der Messung der Pilotsignalstärke, unter Verwendung eines Kommunikationskanals, der gemäß dem ersten Kommunikationsstandard kommuniziert wird;
Mittel zum Erkennen des Vorhandenseins eines Rundsendesteuerkanals, als Antwort auf ein Fehlschlagen des Empfangens einer Handoff-Anweisungsmitteilung nach Senden der Pilotstärkenmessungsmitteilung;
Mittel zum Messen eines Trägers-zu-Störungs-Verhältnisses des Rundsendesteuerkanals;
Mittel zum Vergleichen des Träger-zu-Störungs-Verhältnisses mit einem Schwellenwert;
Mittel zum Initiieren, wenn das Träger-zu-Störungs-Verhältnis oberhalb des Schwellenwertes liegt, einer zweiten Kommunikation gemäß einem zweiten Kommunikationsstandard, unter Verwendung eines gemeinsamen Rückwärtsverbindungs-Steuerkanals, der gemäß dem zweiten Kommunikationsstandard kommuniziert wird;
Mittel zum Senden der Pilotstärkenmessungsmitteilung unter Verwendung des gemeinsamen Rückwärtsverbindungs-Steuerkanals; und
Mittel zum Empfangen von Information gemäß dem ersten bzw. zweiten Kommunikationsstandard über das erste und zweite Signal und Einsetzen in einer Soft-Handoff-Operation.

8. Mobilstation nach Anspruch 7, wobei die Mittel zum Empfangen von Information und Einsetzen bei einem Soft-Handoff Mittel zum Kombinieren des ersten und zweiten Signals zum Erzeugen eines Kombinationssignals umfassen.

9. Mobilstation nach Anspruch 8, weiter umfassend:
Mittel zum Fallenlassen entweder des ersten Signals oder des zweiten Signals und Fortsetzen der Kommunikation über den Kommunikationsstandard entsprechend dem nicht fallen gelassenen Signal.

## Revendications

1. Procédé permettant d'effectuer un transfert souple dans un système de communications d'au moins un premier signal émis selon une première norme de communications et un deuxième signal émis selon une deuxième norme de communications, le procédé comprenant les opérations suivantes :
recevoir d'abord ledit premier signal ;
détecter la présence d'un signal pilote ;
mesurer l'intensité de signal pilote dudit signal pilote ; et
émettre un message de mesure d'intensité de signal pilote, sur la base de ladite mesure d'intensité de signal pilote, en utilisant un canal de communication transmis en fonction de ladite première norme de communications ;
**caractérisé par** les opérations suivantes :
échouer dans la réception d'un message de direction de transfert après ladite émission dudit message de mesure d'intensité de signal pilote ;
en réponse à l'échec dans la réception du message de direction de transfert, détecter la présence d'un canal de commande de diffusion ;
mesurer le rapport porteuse-interférence dudit canal de commande de diffusion ;
comparer ledit rapport porteuse-interférence à un seuil ;
lancer, si ledit rapport porteuse-interférence est au-dessus dudit seuil, une deuxième communication selon ladite deuxième norme de communications en utilisant un canal de commande commun de liaison inverse transmis selon ladite deuxième norme de communications ;
émettre ledit message de mesure d'intensité de signal pilote en utilisant ledit canal de commande commun de liaison inverse ; et
recevoir des informations selon lesdites première et deuxième normes de communications respectivement par l'intermédiaire desdits premier et deuxième signaux et engager une opération de transfert souple.

2. Procédé selon la revendication 1, comprenant en outre une opération qui consiste à égaliser le débit de données de communications desdits premier et deuxième signaux transmis selon lesdites première et deuxième normes de communications.

3. Procédé selon la revendication 1, comprenant en outre l'opération qui consiste à combiner lesdits premier et deuxième signaux.

4. Procédé selon la revendication 1, comprenant les opérations suivantes :
recevoir ledit message de mesure d'intensité de signal pilote via ledit premier canal de commande commun ; et
détecter ledit message de mesure d'intensité de signal pilote dudit signal pilote émis selon ladite deuxième norme.

5. Procédé selon la revendication 1, comprenant en outre l'opération qui consiste à déterminer ledit seuil sur la base d'un niveau de puissance attribué qui est affecté audit signal pilote, du niveau de puissance attribué qui est affecté audit canal de commande de diffusion, et d'un seuil de transfert souple dudit système de communications.

6. Procédé selon la revendication 1, comprenant en outre l'opération qui consiste à laisser tomber l'un desdits premier et deuxième signaux et à poursuivre la communication via la norme de communications qui correspond au signal qui n'a pas été laissé tomber.

7. Poste mobile, comprenant :
un moyen servant à recevoir initialement un premier signal, où ledit premier signal correspond à une première norme de communications ;
un moyen servant à détecter la présence d'un signal pilote ;
un moyen servant à mesurer l'intensité de signal pilote dudit signal pilote ;
un moyen servant à émettre un message de mesure d'intensité pilote, sur la base de ladite mesure d'intensité de signal pilote, en utilisant un canal de communications transmis selon ladite première norme de communications ;
un moyen qui, en réponse à l'échec dans la réception d'un message de direction de transfert après ladite émission dudit message de mesure d'intensité de signal pilote, détecte la présence d'un canal de commande de diffusion ;
un moyen servant à mesurer le rapport porteuse-interférence dudit canal de commande de diffusion ;
un moyen servant à comparer ledit rapport porteuse-interférence avec un seuil ;
un moyen servant à lancer, lorsque ledit rapport porteuse-interférence est au-dessus dudit seuil, une deuxième communication selon une deuxième norme de communications en utilisant un canal de commande commun de liaison inverse transmis selon ladite deuxième norme de communications ;
un moyen servant à émettre ledit message de mesure d'intensité de signal pilote en utilisant ledit canal de commande commun de liaison inverse ; et
un moyen servant à recevoir des informations en fonction desdites première et deuxième normes de communications respectivement par l'intermédiaire desdits premier et deuxième signaux et à engager une opération de transfert souple.

8. Poste mobile selon la revendication 7, où ledit moyen servant à recevoir des informations et à engager un transfert souple comprend un moyen servant à combiner lesdits premier et deuxième signaux afin de produire un signal combiné.

9. Poste mobile selon la revendication 8, comprenant en outre un moyen permettant de laisser tomber l'un desdits premier et deuxième signaux et de poursuivre la communication via la norme de communications qui correspond au signal qui n'a pas été laissé tomber.
